# EUROPÄISCHE PATENTSCHRIFT

(11) **EP 0 367 764 B1**
(45) Veröffentlichungstag und Bekanntmachung des Hinweises auf die Patenterteilung: **03.03.1993**
(21) Anmeldenummer: 88903741.2
(22) Anmeldetag: 13.05.1988
(51) Int. Cl.: C02F 11/02, C02F 3/20, C02F 3/30, B01D 19/02

(54) **VERFAHREN ZUR ENTSORGUNG, INSBESONDERE HYGIENISIERUNG, DES IN EINER KLÄRANLAGE ANFALLENDEN SCHLAMMES**
PROCESS FOR DISPOSAL, AND IN PARTICULAR HYGIENIC TREATMENT, OF THE SLUDGE FORMED IN A CLARIFICATION PLANT
PROCEDE POUR DEPOLLUER, NOTAMMENT HYGIENISER, LA BOUE PRODUITE DANS UNE STATION D'EPURATION

(30) Priorität: 15.05.1987 AT 1238/87
(43) Veröffentlichungstag der Anmeldung: 16.05.1990
(73) Patentinhaber: MEHAG HANDELSGESELLSCHAFT M.B.H., A-2380 Perchtoldsdorf (AT)
(72) Erfinder: DECASPER, Melchior, CH-7000 Chur (CH); NEBIKER, Hans, CH-4450 Sissach (CH)
(74) Vertreter: Brauneiss, Leo, Dipl.Ing.
(86) Internationale Anmeldenummer: AT8800031
(87) Internationale Veröffentlichungsnummer: WO8808827

(56) Entgegenhaltungen:
- FR-A- 2 530 487
- GB-A- 2 047 343
- Water Pollution Control Federation, "Waste water treatment plant design", 1977, W.P.C.F., (Washington, US), Seiten 502-514

## Beschreibung

Die Erfindung betrifft ein Verfahren zur Entsorgung, insbesondere Hygienisierung, des in einer Kläranlage anfallenden Schlammes, der zunächst wenigstens einem Reaktorbehälter zur aeroben Behandlung chargenweise zugeführt wird, in dem wenigstens eine Belüftungseinrichtung und wenigstens eine Einrichtung zum Zerstören des sich auf der Oberfläche des im Reaktorbehälter befindlichen Substrates bildenden Schaumes angeordnet ist, worauf der behandelte Schlamm von einem Schlammsilo aufgenommen wird.

Es ist bereits bekannt, bei der Behandlung kommunaler Klärschlämme aerob-thermophile Verfahren einzusetzen. Hiebei wird der aus einer mechanischen und/oder biologischen Abwasserreinigung anfallende Überschußschlamm einem wärmegedämmten Reaktorbehälter zugeführt, wo der Schlamm bei gleichzeitiger intensiver Durchmischung belüftet wird und der dabei an der Oberfläche entstehende Schaum zerstört wird. Hiebei wird der organische Schlamm bei biogener Selbsterwärmung zu einem anorganischen Endprodukt abgebaut, das unter praktischen Bedingungen seuchenhygienisch unbedenklich ist, d.h. bei dem pathogene Bakterien (Salmonellen, Euterobacteria, Ceen), Wurmeier (Parasiten, Ascaris-Eier) und Viren unschädlich gemacht sind.

Es ist auch bekannt, zwei Reaktorbehälter hintereinander zu schalten, wobei der erste Reaktorbehälter überwiegend im mesophilen Bereich, der zweite Reaktorbehälter ständig im thermophilen Bereich arbeitet. Es wurde hiebei auch bereits vorgeschlagen, die im zweiten Reaktorbehälter entstehende Wärme zu verwerten, insbesondere für die Vorwärmung des diesem zweiten Reaktorbehälter zugeführten Schlammes zu verwenden, so daß hiedurch die Zufuhr von Fremdwärme weitgehend reduziert werden kann.

Der so behandelte Schlamm wird in einem Schlammsilo gesammelt und kann auf landwirtschaftlichen Nutzflächen als Dünger verwendet werden.

Es ist weiters bekannt, dem Reaktorbehälter einen Faulraum nachzuschalten, in dem der Schlamm ausgefault und stabilisiert wird und Methangas erzeugt wird, welches gleichfalls zur Wärmegewinnung verwendet werden kann. Der ausgefaulte Schlamm weist keinen unangenehmen Geruch auf und ist bis 18 % Trockensubstanzgehalt pumpfähig, und das Absetzverhalten des Schlammes wird durch die Konditionierung stark verbessert.

Zur Belüftung des Schlammes im Reaktorbehälter werden bei bekannten Verfahren am Behälterrand sogenannte Wendelbelüfter fest angeordnet, welche gleichzeitig zur Durchmischung des Behälterinhaltes dienen, wogegen in der Behältermitte ein Umwälzbelüfter auf Schwimmern gelagert ist. Die Wendelbelüfter weisen einen oberhalb des Schlammniveaus angeordneten Motor auf, der mit einer Hohlwelle verbunden ist, die an ihrem Ende einen Rotor mit schraubenlinienförmig gewundenen Flügeln trägt. Über die Hohlwelle wird Luft angesaugt, die an der Rotornabe austritt.

Bei dem bekannten Umwälzbelüfter ist der Antriebsmotor gleichfalls oberhalb des Schlammniveaus angeordnet und mit einer Welle verbunden, die ein Schaufelrad trägt, das den flüssigen Schlamm ansaugt und ihn parallel zur Wasseroberfläche wieder abströmen läßt. Der hiebei entstehende Unterbruck bewirkt eine Luftansaugung, so daß infolge der auftretenden Turbulenzen eine Belüftung des Schlammes erfolgt.

Nachteilig ist bei diesen bekannten Belüftern, daß keine gleichmäßige Belüftung des gesamten Behälterinhaltes erfolgt, daß diese Belüfter einen großen Energiebedarf aufweisen, und daß die beim Betrieb der Motoren entstehende Wärme ungenützt ist.

Bei einem anderen bekannten Verfahren wird der Schlamm zur Belüftung aus dem Reaktorgefäß in einer gewissen Höhe abgepumpt und über eine Kreislaufleitung wieder dem Reaktorgefäß im Bodenbereich desselben zugeführt, wobei in die Kreislaufleitung ein Injektor eingeschaltet ist, über welchen dem im Kreislauf geführten Schlamm Luft zugeführt wird. Auch bei dieser Anordnung wird keine gleichmäßige Belüftung des gesamten Behälterinhaltes erzielt, wie sie für eine wirkungsvolle aerobe Behandlung des Schlammes erforderlich ist, und es erfolgt keine Nutzung der beim Antrieb der Pumpe durch den Motor entstehenden Wärme.

Aus der GB-A-2 047 343 ist eine Belüftungseinrichtung für die Belüftung von Flüssigdünger und Abwässern bekannt geworden, die ein von einem Tauchmotor zu einer Rotationsbewegung angetriebenes, etwa horizontal unterhalb des Motors angeordnetes scheibenförmiges Laufrad aufweist, dessen Oberseite eine ringförmige Öffnung eines Luftkanals abdeckt, der über eine Luftansaugleitung verbunden ist, wobei die Unterseite des Laufrades mit etwa radial verlaufenden Rippen versehen ist und am Umfang durch einen Abdeckring abgedeckt ist, und wobei zwischen dem Rand der ringförmigen Öffnung des Luftkanales und der Oberseite des Laufrades sowie zwischen dem Abdeckring und der Unterseite des Laufrades ein Spalt freigehalten ist.

Die Verwendung einer solchen bekannten, der Belüftung von Flüssigdünger oder Abwasser, also Materialien mit flüssiger Konsistenz, dienenden Belüftungseinrichtung für ein Verfahren zur Entsorgung des in einer Kläranlage anfallenden Schlammes ist nicht offenbart.

Die vorliegende Erfindung hat sich zur Aufgabe gestellt, eine Vorrichtung und ein Verfahren zur Entsorgung des in einer Kläranlage anfallenden Schlammes derart zu verbessern, daß der Wirkungsgrad erhöht wird und ein anorganischer, hygienisch unbedenklicher und geruchloser Schlamm innerhalb einer kurzen Verweildauer in den Reaktorbehältern erzielt wird.

Überraschenderweise hat sich nun gezeigt, daß die Verwendung einer solchen an sich bekannten Belüftungseinrichtung bei einem Verfahren der eingangs beschriebenen Art zur Entsorgung des in einer Kläranlage anfallenden Schlammes nicht nur möglich ist, sondern daß mit einer solchen Belüftungseinrichtung auch wesentliche Vorteile gegenüber den bisher verwendeten Einrichtungen erzielt werden können. Bei Anwendung dieser Belüftungseinrichtung wird das im Reaktorbehälter befindliche Substrat an der Unterseite des Laufrades zentrisch angesaugt und durch die Rippen nach außen geschleudert, wo es durch den Spalt zwischen der Unterseite des Laufrades und dem Abdeckring austritt, wobei gleichzeitig Luft angesaugt und durch den Spalt zwischen der Oberseite des Laufrades und dem Rand der ringförmigen Öffnung des Luftkanales nach außen gefördert wird. Am Ende der beiden benachbart angeordneten Spalte vermischt sich die Luft innig mit dem Substrat, so daß eine hervorragende vollständige Durchlüftung des Substrates bewirkt wird. Die Menge der zugeführten Luft ist bei der erfindungsgemäßen Ausbildung der Belüftungseinrichtung wesentlich größer als bei den bekannten Belüftungseinrichtungen, wodurch das aerobe Behandlungsverfahren des Schlammes wirksamer abläuft. Dadurch, daß das belüftete Substrat radial nach außen gefördert wird, erfolgt eine gleichmäßige Durchlüftung des gesamten Behälterinhaltes. Schließlich wird dadurch, daß bei der erfindungsgemäßen Belüftungseinrichtung ein Tauchmotor verwendet wird, der im Behälterinhalt versenkt angeordnet ist, die beim Betrieb des Motors entstehende Wärme in gewünschter Weise zur Erwärmung des Behälterinhaltes verwendet, wodurch gleichfalls das aerobe Behandlungsverfahren beschleunigt abläuft.

Vorzugsweise wird beim erfindungsgemäßen Verfahren ein Abdeckring verwendet, dessen Außendurchmesser größer ist und dessen Innendurchmesser kleiner ist als der Durchmesser des Laufrades, wodurch sich eine gute Führung des Substrates im Bereich des Spaltes ergibt und die Belüftung verbessert wird.

Zweckmäßig verlaufen die Rippen an der Unterseite des Laufrades bogenförmig und es sind zumindest acht, vorzugsweise zwischen acht und zwanzig, Rippen vorgesehen.

Die Menge der dem Substrat zugeführten Luft ist wesentlich für den Ablauf des aeroben Prozesses bzw. für die Aufrechterhaltung der für diesen Prozeß benötigten Temperaturen im Behälter. Um diese Temperatur auf den gewünschten Wert einstellen zu können, ist erfindungsgemäß der Motor über eine Leistungsregeleinrichtung gespeist, so daß die Luftzufuhr zum Substrat auf einfache Weise verändert werden kann. Bei einer besonders einfachen Ausführungsform ist der Motor ein Wechselstrommotor und über eine Frequenzregeleinrichtung gespeist. Die Leistungsregeleinrichtung kann hiebei automatisch in Abhängigkeit von der Temperatur und/oder der Schaumhöhe im Reaktorbehälter gesteuert sein. Diese Schaumhöhe darf ein bestimmtes Maß nicht überschreiten, so daß auch bei einer übermäßigen Schaumbildung die Luftzufuhr verringert werden muß, damit die Schaumbildung zurückgeht.

Vorzugsweise sind mehrere von Tauchmotoren angetriebene scheibenförmige Laufräder für die Belüftung des Schlammes angeordnet, wobei pro 20 bis 25 m³ Behälterinhalt je ein Laufrad vorgesehen ist. In diesem Fall wird bei jeder Größe des Reaktionsbehälters eine hinreichende Durchlüftung des Behälterinhaltes gewährleistet.

Zur Zerstörung des sich auf der Oberfläche des im Reaktorbehälter befindlichen Substrates bildenden Schaumes wird beim erfindungsgemäßen Verfahren eine Einrichtung verwendet, die ein von einem Tauchmotor zu einer Rotationsbewegung angetriebenes, etwa horizontal im Bereich der Grenze zwischen der flüssigen und der schaumförmigen Phase des Substrates oberhalb des Motors angeordnetes scheibenförmiges Laufrad aufweist, dessen Oberseite mit etwa radial verlaufenden Rippen versehen ist. Diese Einrichtung entspricht somit konstruktiv, abgesehen vom fehlenden Abdeckring, vom fehlenden Luftkanal und der fehlenden Luftansaugleitung, der beim erfindungsgemäßen Verfahren verwendeten Belüftungseinrichtung, wird jedoch umgekehrt im Reaktorbehälter angeordnet, so daß sich bei dieser Einrichtung das Laufrad oberhalb des Tauchmotors befindet. Außerdem ist die Anzahl der Rippen am Laufrad bei dieser Einrichtung zur Zerstörung des sich auf der Oberfläche des im Reaktorbehälter befindlichen Substrates bildenden Schaumes geringer als die Anzahl der Rippen am Laufrad der Belüftungseinrichtung und beträgt vorzugsweise weniger als die Hälfte der Anzahl dieser Rippen der Belüftungseinrichtung. Bei Anwendung dieser Einrichtung zur Zerstörung des Schaumes wird der Schaum zentrisch vom Laufrad angesaugt und radial nach außen gefördert, wobei er sich hiebei verflüssigt und nach unten gedrückt wird, wo er sich mit dem flüssigen Substrat, vermengt. Dadurch erfolgt nicht nur ein Zerschlagen des Schaumes, wie dies bei den bekannten Einrichtungen der Fall ist, sondern eine wirksame Beseitigung desselben.

Bei Behältern mit größeren Durchmessern ist es von Vorteil, wenn erfindungsgemäß im Reaktorbehälter wenigstens ein Vertikalmischer zum Durchmischen des Behälterinhaltes in vertikaler Richtung vorgesehen ist, durch den eine zusätzliche Homogenisierung des belüfteten Behälterinhaltes erfolgt.

Ein Verfahren zur Entsorgung, insbesondere Hygienisierung, des in einer Kläranlage anfallenden Schlammes, wobei der Schlamm wenigstens einem Reaktorbehälter chargenweise zugeführt wird und dort einer aeroben Behandlung unter Verwendung wenigstens einer Belüftungseinrichtung und wenigstens einer Einrichtung zum Zerstören des sich auf der Oberfläche des sich im Reaktorbehälter befindlichen Substrates bildenden Schaumes unterworfen wird, ist erfindungsgemäß weiters dadurch gekennzeichnet, daß die durch die Belüftungseinrichtung bewirkte Luftzufuhr gesteuert wird. Durch die Steuerung der Luftzufuhr läßt sich die Temperatur des im Reaktorbehälter befindlichen Schlammes regeln, also auf den für den Ablauf des aeroben Behandlungsverfahrens optimalen Wert einstellen. Ferner läßt sich durch diese Steuerung der Luftzufuhr auch die Schaumbildung beeinflussen, da diese zurückgeht, wenn weniger Luft in das flüssige Substrat eingerührt wird. Diese Steuerung der Luftzufuhr kann beispielsweise durch Abschalten einzelner Belüftungseinrichtungen erfolgen. Zweckmäßig erfolgt jedoch die Steuerung der Luftzufuhr durch eine Leistungsregelung der Belüftungseinrichtungen, beispielsweise durch Frequenzsteuerung.

Aus der FR-A-2 109 871 ist bereits ein Verfahren bekanntgeworden, bei welchem gleichzeitig eine Belüftung eines Behälterinhaltes und eine Behandlung des dabei entstehenden Schaumes erfolgt. Über die Art der verwendeten Belüftungseinrichtung oder der Luftzufuhr ist jedoch in dieser Druckschrift nichts ausgesagt. Außerdem wird der im Behälter entstehende Schaum bei diesem bekannten Verfahren nicht zerstört, sondern mit Hilfe der Einrichtung zur Behandlung des Schaumes mit einem Teil der Flüssigkeit einem anderen Behälter zur weiteren Behandlung zugeführt.

Als Steuergröße für die Steuerung der Luftzufuhr kann erfindungsgemäß die Leistungsaufnahme der Einrichtung zum Zerstören des sich auf der Oberfläche des im Reaktorbehälter befindlichen Substrates bildenden Schaumes herangezogen werden. Bilden sich nämlich große Schaummengen an der Oberfläche, so vergrößert sich die Leistungsaufnahme der Einrichtungen zum Zerstören dieses Schaumes, so daß hiedurch automatisch eine Verringerung der Luftzufuhr bewirkt werden kann, die wiederum die Bildung einer geringeren Schaummenge zur Folge hat.

Als Steuergröße für die Steuerung der Luftzufuhr kann aber erfindungsgemäß auch die Temperatur des im Reaktorbehälter befindlichen Schlammes herangezogen werden, damit diese Temperatur innerhalb bestimmter Grenzen konstant gehalten wird.

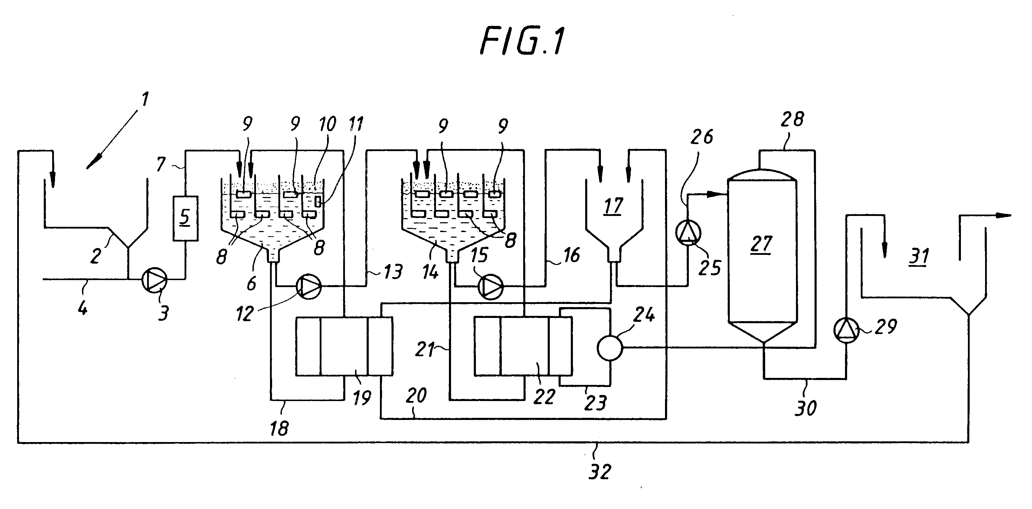

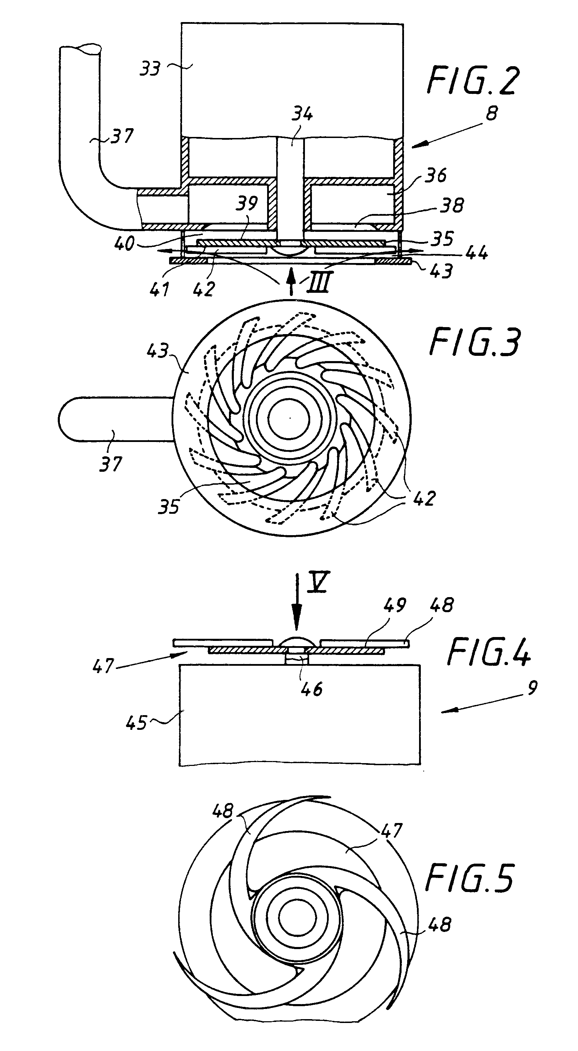

In der Zeichnung ist die Erfindung an Hand eines Ausführungsbeispieles schematisch veranschaulicht. Fig.1 zeigt das Prinzipschema einer für die Durchführung des erfindungsgemäßen Verfahren anwendbaren Vorrichtung. Fig.2 stellt in Seitenansicht, teilweise im Schnitt, eine Belüftungseinrichtung dar und Fig.3 zeigt eine Ansicht in Richtung des Pfeiles III in Fig.2. Fig 4 zeigt in Seitenansicht, teilweise im Schnitt, eine Einrichtung zum Zerstören des sich auf der Oberfläche des im Reaktorbehälter befindlichen Substrates bildenden Schaumes und Fig 5 eine Ansicht in Richtung des Pfeiles V in Fig 4.

Von einer bekannten biologischen Kläranlage ist in Fig.1 lediglich das Vorklärbecken 1 dargestellt, wo die kolloidalen Stoffe durch Sedimentation ausgeschieden werden und sich am Boden des Beckens absetzen. Von dort werden diese Stoffe in einen Trichter 2 geräumt und mittels einer Pumpe 3 abgepumpt. Der sich in einem Belüftungsbecken einer üblichen biologischen Kläranlage absetzende Überschußschlamm wird über eine Leitung 4 gleichfalls abgepumpt. Beide Schlämme werden nach Ausscheiden der größeren Bestandteile mittels eines Siebes 5 einem ersten Reaktorbehälter 6 über eine Leitung 7 zugeführt. Die Zufuhr des Schlammes, welcher im Winter eine Temperatur von etwa 9°C und im Sommer eine Temperatur von etwa 15°C aufweist, erfolgt nicht kontinuierlich, sondern chargenweise, wie dies im folgenden noch näher beschrieben wird.

Der erste Reaktorbehälter 6 ist zylindrisch ausgebildet und weist wärmeisolierte Wände auf. Die Höhe dieses Reaktorbehälters soll etwa 5 Meter nicht überschreiten, da sonst keine hinreichende und gleichmäßige Belüftung des Behälterinhaltes gewährleistet ist, der Durchmesser des Behälters hingegen kann in weiten Grenzen, je nach dem benötigten Behältervolumen, verändert werden.

Im ersten Reaktorbehälter 6 sind Belüftungseinrichtungen 8, Einrichtungen 9 zur Zerstörung des sich auf der Oberfläche des im Reaktorbehälters befindlichen Substrates bildenden Schaumes 10 sowie ein Vertikalmischer 11 angeordnet. Die besondere Ausbildung dieser Einrichtungen wird in Verbindung mit den Fig.2 bis 5 näher erläutert. Die Belüftungseinrichtungen sind in einer Tiefe von etwa 1,8 bis 2 Meter unter dem Niveau des im Behälter befindlichen flüssigen Substrates eingesetzt. Pro 20 bis 25 m³ Behälterinhalt ist je eine Belüftungseinrichtung vorgesehen.

Die Einrichtungen 9 zur Zerstörung des Schaumes 10 sind in der Regel in einer geringeren Anzahl als die Belüftungseinrichtungen 8 vorgesehen, wobei für etwa 25 m² Oberfläche des flüssigen Substrates je eine solche Einrichtung benötigt wird.

Der Vertikalmischer 11 bewirkt ein Durchmischen des Behälterinhaltes in vertikaler Richtung. Dieser Vertikalmischer kann bei Reaktorbehältern kleineren Durchmessers auch entfallen, da dort eine vertikale Durchmischung bereits durch die Belüftungseinrichtungen 8 und die Einrichtungen 9 zum Zerstören des Schaumes 10 erfolgt.

Im Reaktorbehälter 6 findet eine aerobe Behandlung des Schlammes statt, wobei der Kohlenstoff des Schlammes durch die Mikroorganismen abgebaut wird und gleichzeitig eine Erwärmung stattfindet. Das im Reaktorbehälter befindliche Substrat wird hiebei auf einer optimalen Temperatur von ca. 33°C gehalten, bei der die Bakterien günstige Bedingungen vorfinden.

Nach einer Verweilzeit des Schlammes von etwa 4 Stunden im ersten Reaktorbehälter 6 wird etwa 1/6 des eine Temperatur von ca. 33°C aufweisenden Behälterinhaltes mittels einer Pumpe 12 abgepumpt und über eine Leitung 13 einem zweiten Reaktorbehälter 14 zugeführt. Sobald dieser Vorgang beendet ist, wird die nun im ersten Reaktorbehälter 6 fehlende Schlammenge durch Zufuhr von Frischschlamm über die Leitung 7 ergänzt, wobei die Temperatur in diesem ersten Reaktorbehälter 6 um etwa 3°C absinkt. Es erfolgt somit, wie bereits erwähnt, eine chargenweise Zufuhr von Frischschlamm, und zwar zweckmäßig derart, daß innerhalb von 24 Stunden der gesamte Behälterinhalt ausgetauscht wurde. Durch die chargenweise Ergänzung jeweils immer nur eines Teiles des Inhaltes der Reaktorbehälter 6, 14 wird sichergestellt, daß der Großteil des Muttersubstrates in den Reaktorbehältern verbleibt, wodurch eine ungestörte Biologie in diesen Behältern aufrecht erhalten wird.

Nach der Zufuhr von Frischschlamm sinkt die Temperatur im ersten Reaktorbehälter 6 ab, es erfolgt jedoch durch die Wärmeentwicklung beim Abbau des Kohlenstoffes durch die Mikroorganismen in der Folge wieder ein Temperaturanstieg.

Der biologische Reinigungsvorgang startet auch bei erstmaliger Führung des Reaktorbehälters 6 automatisch, ohne daß Bakterien zugesetzt werden müssen In diesem Fall ist es am günstigsten, mit einer kleinen Schlammenge zu beginnen, damit sich das Muttersubstrat bilden kann, bevor der Reaktorbehälter zur Gänze mit Schlamm gefüllt wird.

Der zweite Reaktorbehälter 14 entspricht in konstruktiver Hinsicht dem ersten Reaktorbehälter 6, jedoch sind im zweiten Reaktorbehälter 14 eine größere Anzahl von Einrichtungen 9 zur Zerstörung des sich auf der Oberfläche bildenden Schaumes 10 vorgesehen, da die Schaumbildung in diesem zweiten Reaktorbehälter 14 größer ist.

Wie bereits erwähnt, ist die Einhaltung bestimmter Temperaturen in den beiden Reaktorbehältern 6,14 wesentlich, damit die Bakterien optimale Bedingungen vorfinden. Der erste Reaktorbehälter 6 arbeitet mit einer Temperatur von etwa 33°C, der zweite Reaktorbehälter 14 mit einer Temperatur von etwa 55°C. Im ersten Reaktorbehälter 6 findet somit ein aerober mesophiler Prozeß, im zweiten Reaktorbehälter 14 ein aerober thermophiler Prozeß statt. Die Steuerung der gewünschten Temperatur kann durch Veränderung der Zeitintervalle zwischen den einzelnen Chargen erfolgen, eine Feinregelung kann jedoch durch die Steuerung der Luftzufuhr vorgenommen werden. Letzteres kann entweder durch Abschalten einzelner Belüftungseinrichtungen 8 bewirkt werden. Zweckmäßiger ist es jedoch, eine Leistungsregelung der die Belüftungseinrichtungen antreibenden Motoren, beispielsweise durch Frequenzsteuerung, vorzunehmen. Durch die Veränderung der Luftzufuhr wird auch die Schaumbildung beeinflußt, da diese umso größer ist, je mehr Luft dem Schlamm zugeführt wird. Da bei einer Vergrößerung der Schaumbildung die Leistungsaufnahme der Einrichtungen zur Zerstörung des Schaumes größer wird, kann diese Leistungsaufnahme als Steuergröße für die Steuerung der Luftzufuhr herangezogen werden.

Eine Steuerung der Luftzufuhr im zweiten Reaktorbehälter 14 ist erforderlich, um ein Überschäumen des sich an der Oberfläche des flüssigen Substrates bildenden Schaumes 10 verhindern zu können.

Vom zweiten Reaktorbehälter 14 wird der Schlamm mittels einer Pumpe 15 über eine Leitung 16 in einen Vorlagebehälter 17 abgefüllt. Das Abfüllen des Schlammes erfolgt gleichfalls chargenweise mit denselben Zeitintervallen und in derselben Teilmenge wie das Abfüllen des ersten Reaktorbehälters 6. Beim Abfüllvorgang muß dafür Sorge getragen werden, daß sich die den beiden Reaktorbehältern 6,14 zugeführte Schlammenge nicht mit der abgeführten Schlammenge vermengt. Dies heißt, daß zunächst beispielsweise 1/6 des Inhaltes des zweiten Reaktorbehälters 14 in den Vorlagebehälter 17 abgefüllt werden muß. Ist dieser Abfüllvorgang beendet, so wird die in diesem zweiten Reaktorbehälter 14 fehlende Schlammmenge über die Leitung 13 aus dem ersten Reaktorbehälter 6 ergänzt. Erst dann, wenn dieser Vorgang beendet ist, erfolgt ein Auffüllen des ersten Reaktorbehälters 6 mit Frischschlamm.

Der Vorlagebehälter 17 muß beim Füllen und Entleeren be- und entlüftet werden. Um eine Rekontamination durch Aerosole zu verhindern, muß die Luft gefiltert werden. Hiezu dienen an sich bekannte Mikrofilter wie bei Trinkwasserreservoirs.

Der erste Reaktorbehälter 6 ist weiters an eine Kreislaufleitung 18 angeschlossen, die über die Sekundärseite eines Wärmetauschers 19 geführt ist, dessen Primärseite über eine Kreislaufleitung 20 mit dem Vor, lagebehälter 17 verbunden ist. Die Anordnung dieses Wärmetauschers bewirkt, daß der über die Kreislaufleitung 20 geführte Inhalt des Vorlagebehälters 17 seine Wärme an den Schlamm im ersten Reaktorbehälter 6 abgibt. Dadurch erfolgt nicht nur die erwünschte Abkühlung des Inhaltes des Vorlagebehälters 17, sondern auch eine Erwärmung des Schlammes im ersten Reaktorbehälter 6, was insbesondere dann von Vorteil ist, wenn diesem Frischschlamm über die Leitung 7 zugeführt wird.

Der zweite Bioreaktor 14 ist an eine Kreislaufleitung 21 angeschlossen, die über die Sekundärseite eines weiteren Wärmetauschers 22 geführt ist. Die Primärseite dieses weiteren Wärmetauschers 22 ist an eine Kreislaufleitung 23 angeschlossen, in der sich ein flüssiges Medium, vorzugsweise Wasser, befindet, das durch die Abwärme eines dem Antrieb von Hilfseinrichtungen dienenden Motors 24 erwärmt wird. Auf diese Weise erfolgt über den weiteren Wärmetauscher 22 eine Erwärmung des Schlammes im zweiten Reaktorbehälter 14.

Aus dem Vorlagebehälter 17 wird der Schlamm mittels einer Pumpe 25 über eine Leitung 26 einem Faulraumbehälter 27 zugeführt.

In diesem findet ein anaerober Prozeß mit Methangärung in einem Zeitraum zwischen 8 und 12 Tagen statt. Das enstehende Methangas wird über eine Leitung 28 abgezogen, die beispielsweise mit dem als Gasmotor ausgebildeten Motor 24 verbunden ist, der somit durch das Methangas angetrieben wird.

Das entstehende Endprodukt wird mittels einer Pumpe 29 über eine Leitung 30 in einem Schlammsilo 31 zwischengelagert und von dort als Düngemittel auf landwirtschaftliche Nutzflächen ausgespritzt Dieses Endprodukt ist geruchsfrei und somit in einem offenen Behälter stapelbar und, hervorgerufen durch die feinere Aufschließung (Fermentation) des Schlammes bis zu 18 % Trockensubstanzgehalt pumpfähig, wogegen nach den herkömmlichen Methoden methanisierter Schlamm nur bis maximal 10 % Trockensubstanzgehalt pumpfähig ist.

Das Trübwasser wird über eine Leitung 32 in das Vorklärbecken 1 rückgeführt.

Wie bereits erwähnt, arbeitet die in Fig.1 dargestellte Vorrichtung im Chargenbetrieb. Dieser läuft bei einer im Betrieb befindlichen Anlage wie folgt ab:

In der ersten Phase wird etwa 1/6 des Inhaltes des zweiten Reaktorbehälters 14 über die Leitung 16 in den Vorlagebehälter 17 umgefüllt. Ist dieser Umfüllvorgang beendet, so erfolgt ein Umfüllen der gleichen Schlammenge vom ersten Bioreaktor 6 in den zweiten Bioreaktor 14 über die Leitung 13. Dem zweiten Reaktorbehälter 14 wird somit ein auf ca. 33°C vorgewärmtes und vorbelüftetes Substrat zugeführt, dessen Entseuchung bereits gut fortgeschritten ist. Dieser Umfüllvorgang bewirkt eine Temperatursenkung im zweiten Reaktorbehälter 14 um etwa 3°C.

Ist diese zweite Phase beendet, so werden in der dritten Phase Vorklärschlamm und Überschußschlamm über die Leitung 7 dem ersten Reaktorbehälter 6 zugeführt. Die Temperatur in diesem ersten Reaktorbehälter 6 sinkt dadurch ab. Um diesen Temperaturabfall zumindest teilweise zu kompensieren, wird der Inhalt des ersten Reaktorbehälters 6 in der vierten Phase über die Kreislaufleitung 18, in die der Wärmetauscher 19 eingeschaltet ist, umgewälzt, wobei in diesem Wärmetauscher, wie erwähnt, eine Erwärmung des umgewälzten Substrates erfolgt. Diese vierte Phase kann sich über einen größeren Zeitabschnitt erstrecken, beispielsweise 3 1/2 Stunden dauern. Dadurch ist es möglich, einen Schlamm-Schlamm-Wärmetauscher mit kleinen Austauschflächen des Wärmeübertragungssystems zu verwenden, in dem die Wärme unmittelbar von dem einen Schlamm auf den anderen Schlamm übertragen wird, eine Zwischenschaltung von Wasser als Zwischenmedium somit nicht erforderlich ist.

In der fünften Phase erfolgt eine Entleerung des im Vorlagebehälter 17 befindlichen, um 15°C rückgekühlten Substrates über die Leitung 26 in den Faulraumbehälter 27, wo die Methangärung stattfindet.

Im Anschluß daran kann das Spiel von Neuem beginnen.

Die in den Fig.2 und 3 dargestellte Belüftungseinrichtung 8 weist ein Gehäuse 33 auf, in dem ein Tauchmotor angeordnet ist, dessen Welle mit 34 bezeichnet ist. Von der Welle 34 wird ein scheibenförmiges Laufrad 35 angetrieben. Im unteren Teil des Gehäuses 33 befindet sich ein Luftkanal 36, der über eine Luftansaugleitung 37 mit der Atmosphäre verbunden ist. Diese Luftansaugleitung 37 endet somit oberhalb des Niveaus des im Reaktorbehälter 6 bzw. 14 befindlichen Substrates. An der Unterseite des Luftkanales 36 befindet sich eine ringförmige Öffnung 38, die von der Oberseite 39 des Laufrades 35 derart abgedeckt wird, daß zwischen dem Rand dieser ringförmigen Öffnung 38 und der Oberseite 39 ein Spalt 40 freigehalten wird.

An der Unterseite 41 des Laufrades 35 sind bogenförmig ausgebildete, etwa radial verlaufende Rippen 42 vorgesehen. Unterhalb des Laufrades 35 befindet sich ein Abdeckring 43 in einem solchen Abstand von der Unterseite 41, daß zwischen dieser Unterseite und dem Abdeckring gleichfalls ein Spalt 44 freigehalten ist.

Der Außendurchmesser des Abdeckringes 43 ist größer und der Innendurchmesser des Abdeckringes 43 kleiner als der Durchmesser des Laufrades 35. Die Anzahl der Rippen 42 ist abhängig von der Tiefe, in welcher sich die Belüftungseinrichtung 8 im Reaktorbehälter 6 bzw. 14 befindet. In der Regel sind zwischen acht und zwanzig solcher Rippen 42 vorgesehen, wobei die Anzahl der Rippen mit zunehmender Tiefe abnimmt.

Wie bereits erwähnt, ist es wesentlich, daß im Reaktorbehälter 6,14 eine bestimmte Temperatur aufrechterhalten wird. Weiters ist es insbesondere im Reaktorbehälter 14 notwendig, dafür zu sorgen, daß der sich bildende Schaum ein gewisses Maß nicht überschreitet, also der Schaum nicht aus dem Reaktorbehälter überläuft. Beides kann durch Veränderung der Luftzufuhr gesteuert werden. Dies kann auf einfache Weise dadurch erzielt werden, daß der Motor über eine nicht dergestellte Leistungsregeleinrichtung gespeist wird, die in Abhängigkeit von der Temperatur und/oder von der Schaumhöhe im Reaktorbehälter 6 bzw. 14 gesteuert wird. Zweckmäßig ist der Motor ein Wechselstrommotor und über eine Frequenzregeleinrichtung gespeist.

Die erfindungsgemäße Belüftungseinrichtung 8 arbeitet wie folgt:
Bei der Rotation des Laufrades 35 wird einerseits durch die an der Unterseite 41 vorgesehenen Rippen 42 das Substrat zentrisch angesaugt und in Richtung zur Umfang des Laufrades gefördert, anderseits erfolgt ein Ansaugen von Luft über die Luftansaugleitung 37, welche aus dem Spalt 40 austritt und sich dort mit dem aus dem Spalt 44 herausgeschleuderten Substrat innig vermischt, so daß eine hervorragende Belüftung dieses Substrates bei gleichzeitiger Umwälzung erzielt wird. Die beiden Spalte 40,44 gewährleisten eine gute Saugwirkung sowohl für das Substrat als auch für die Luft.

Die in den Fig.4 und 5 dargestellte Einrichtung 9 zur Zerstörung des sich auf der Oberfläche des im Reaktorbehälter 6 bzw. 14 befindlichen Substrates bildenden Schaumes 10 weist ein Gehäuse 45 auf, in dem gleichfalls ein Tauchmotor untergebracht ist, dessen Welle 46 ebenfalls ein scheibenförmiges Laufrad 47 antreibt, welches sich bei dieser Einrichtung oberhalb des Tauchmotors, etwa horizontal im Bereich der Grenze zwischen der flüssigen und der schaumförmigen Phase des Substrates befindet. Die Rippen 48 sind auf der Oberseite 49 des Laufrades vorgesehen und verlaufen gleichfalls bogenförmig radial nach außen. Die Anzahl der Rippen 48 bei dieser Einrichtung ist jedoch geringer als die Anzahl der Rippen 42 der Belüftungseinrichtung 8 und beträgt vorzugsweise weniger als die Hälfte.

Auf der Oberseite 49 des Laufrades 47, das bei dieser Einrichtung zur Zerstörung des Schaumes durch keinen Abdeckring abgedeckt ist, wird der sich auf der Oberfläche des Substrates bildende Schaum wirksam dadurch zerstört, daß der Schaum im Zentrum des Laufrades 47 angesaugt und in Richtung zum Umfang des Laufrades gefördert wird, wo er verflüssigt wird.

Die Leistungsaufnahme des Tauchmotors der Einrichtung 9 zur Zerstörung des Schaumes kann als Steuergröße für die Leistungsregelung der Belüftungseinrichtung 8 verwendet werden. Wird nämlich die Schaummenge zu groß, so steigt die Leistungsaufnahme des Motors der Einrichtung 9 zur Zerstörung des Schaumes, wodurch bewirkt werden kann, daß die Belüftungseinrichtungen 8 mit verringerter Leistung arbeiten, also die Luftzufuhr gedrosselt wird, wodurch die Schaumbildung zurückgeht.

## Patentansprüche

1. Verfahren zur Entsorgung, insbesondere Hygienisierung, des in einer Kläranlage anfallenden Schlammes, der zunächst wenigstens einem Reaktorbehälter (6) zur aeroben Behandlung chargenweise zugeführt wird, in dem wenigstens eine Belüftungseinrichtung (8) und wenigstens eine Einrichtung (9) zum Zerstören des sich auf der Oberfläche des im Reaktorbehälter (6) befindlichen Substrates bildenden Schaumes (10) angeordnet ist, worauf der behandelte Schlamm von einem Schlammsilo (31) aufgenommen wird, gekennzeichnet durch die Anwendung einer Belüftungseinrichtung (8) mit einem von einem Tauchmotor zu einer Rotationsbewegung angetriebenen, etwa horizontal unterhalb des Motors angeordneten scheibenförmigen Laufrad (35), dessen Oberseite (39) eine ringförmige Öffnung (38) eines Luftkanales (36) abdeckt, der über eine Luftansaugleitung (37) mit der Atmosphäre in Verbindung steht, und dessen Unterseite (41) mit etwa radial verlaufenden Rippen (42) versehen ist und am Umfang durch einen Abdeckring (43) abgedeckt ist, wobei zwischen dem Rand der ringförmigen Öffnung (38) des Luftkanales (36) und der Oberseite (39) des Laufrades (35) sowie zwischen dem Abdeckring (43) und der Unterseite (41) des Laufrades (35) ein Spalt (40,41) freigehalten ist.

2. Verfahren nach Anspruch 1, dadurch gekennzeichnet, daß ein Abdeckring (43) verwendet wird, dessen Außendurchmesser größer ist und dessen Innendurchmesser kleiner ist als der Durchmesser des Laufrades (35).

3. Verfahren nach Anspruch 1, dadurch gekennzeichnet, daß die Rippen (42) an der Unterseite (41) des Laufrades (35) bogenförmig verlaufen.

4. Verfahren nach Anspruch 1, 2 oder 3, dadurch gekennzeichnet, daß zumindest 8, vorzugsweise zwischen 8 und 20 Rippen (42) vorgesehen sind.

5. Verfahren nach einem der Ansprüche 1 bis 4, dadurch gekennzeichnet, daß der Motor über eine Leistungsregeleinrichtung gespeist wird.

6. Verfahren nach Anspruch 5, dadurch gekennzeichnet, daß der Motor ein Wechselstrommotor ist und über eine Frequenzregeleinrichtung gespeist wird.

7. Verfahren nach Anspruch 5 oder 6, dadurch gekennzeichnet, daß die Leistungsregeleinrichtung in Abhängigkeit von der Temperatur und/oder von der Schaumhöhe im Reaktorbehälter gesteuert wird.

8. Verfahren nach einem der Ansprüche 1 bis 7, dadurch gekennzeichnet, daß mehrere von Tauchmotoren angetriebene scheibenförmige Laufräder (35) für die Belüftung des Schlammes verwendet werden, wobei pro 20 bis 25 m³ Behälterinhalt je ein Laufrad vorgesehen ist.

9. Verfahren nach Anspruch 1, gekennzeichnet durch die Anwendung einer Einrichtung (9) zur Zerstörung des sich auf der Oberfläche des im Reaktorbehälter (6,14) befindlichen Substrates bildenden Schaumes (10), die ein von einem Tauchmotor zu einer Rotationsbewegung angetriebenes, etwa horizontal im Bereich der Grenze zwischen der flüssigen und der schaumförmigen Phase des Substrates oberhalb des Motors angeordnetes scheibenförmiges Laufrad (47) aufweist, dessen Oberseite (49) mit etwa radial verlaufenden Rippen (48) versehen ist.

10. Verfahren nach Anspruch 9, dadurch gekennzeichnet, daß die Rippen (48) an der Oberseite (49) des Laufrades (47) bogenförmig verlaufen.

11. Verfahren nach einem der Ansprüche 1 bis 10, dadurch gekennzeichnet, daß die Anzahl der Rippen (48) am Laufrad (47) der Einrichtung (9) zum Zerstören des Schaumes geringer ist als die Anzahl der Rippen (42) am Laufrad (35) der Belüftungseinrichtung (8), vorzugsweise weniger als die Hälfte der Anzahl der Rippen der Belüftungseinrichtung, beträgt.

12. Verfahren nach einem der Ansprüche 1 bis 11, dadurch gekennzeichnet, daß der Inhalt des Reaktorbehälters (6,14) durch wenigstens einen Vertikalmischer (11) in vertikaler Richtung durchgemischt wird.

13. Verfahren nach einem der Ansprüche 1 bis 12, dadurch gekennzeichnet, daß zwischen dem Schlammsilo und dem vorgeschalteten Reaktorbehälter ein Faulraum zur anaeroben Behandlung des Schlammes eingeschaltet wird.

14. Verfahren zur Entsorgung, insbesondere Hygienisierung, des in einer Kläranlage anfallenden Schlammes, wobei der Schlamm wenigstens einem Reaktorbehälter (6) chargenweise zugeführt wird und dort einer aeroben Behandlung unter Verwendung wenigstens einer Belüftungseinrichtung (8) und wenigstens einer Einrichtung (9) zum Zerstören des sich auf der Oberfläche des im Reaktorbehälter (6) befindlichen Substrates bildenden Schaumes (10) unterworfen wird, dadurch gekennzeichnet, daß die durch die Belüftungseinrichtung (8) bewirkte Luftzufuhr gesteuert wird.

15. Verfahren nach Anspruch 14, dadurch gekennzeichnet, daß die Steuerung der Luftzufuhr durch eine Leistungsregelung der Belüftungseinrichtungen (8) erfolgt.

16. Verfahren nach Anspruch 14 oder 15, dadurch gekennzeichnet, daß die Leistungsaufnahme der Einrichtung zur Zerstörung des sich auf der Oberfläche des im Reaktorbehälter befindlichen Substrates bildenden Schaumes (10) als Steuergröße für die Steuerung der Luftzufuhr herangezogen wird.

17. Verfahren nach Anspruch 14 oder 15, dadurch gekennzeichnet, daß die Temperatur des im Reaktorbehälter befindlichen Schlammes als Steuergröße für die Steuerung der Luftzufuhr herangezogen wird.

18. Verfahren nach einem der Ansprüche 14 bis 17, dadurch gekennzeichnet, daß der Schlamm anschließend einer anaeroben Behandlung ausgesetzt wird.

## Claims

1. A process for the disposal, in particular the hygienizing treatment, of the sludge formed in a clarification plant, which sludge is first passed in batches for aerobic treatment to at least one reactor container (6) in which at least one aeration device (8) and at least one device (9) for the destruction of the foam (10) forming on the surface of the substrate present in the reactor container (6) are provided, whereupon the treated sludge is received by a sludge silo (31), characterized by the use of an aeration device (8) having a disk-shaped rotor wheel (35) disposed approximately horizontally underneath a submersible motor and driven in rotating motion by said motor,the upper side (39) of the rotor wheel (35) covering an annular orifice (38) of an air channel (36) connected to the atmosphere via an air aspiration line (37), the underside (41) of the rotor wheel (35) being provided with approximately radially extending ribs (42) and covered along its circumference by a covering ring (43), a gap (40, 41) being kept clear between the edge of the annular orifice (38) of the air channel (36) and the upper side (39) of the rotor wheel (35) as well as between the covering ring (43) and the underside (41) of the rotor wheel (35).

2. The process according to claim 1, characterized by the use of a covering ring (43) whose outer diameter is larger than the diameter of the rotor wheel (35) and whose inner diameter is smaller than the diameter of the rotor wheel (35).

3. The process according to claim 1, characterized in that the ribs (42) extend arcuately on the underside (41) of the rotor wheel (35).

4. The process according to any one of the claims 1, 2 and 3, characterized in that at least 8, preferably between 8 and 20 ribs (42) are provided.

5. The process according to any one of the claims 1 to 4, characterized in that the motor is fed via an output regulating means.

6. The process according to claim 5, characterized in that the motor is an alternating current motor and fed via a frequency regulating means.

7. The process according to claim 5 or 6, characterized in that the output regulating means is controlled as a function of the temperature and/or the foam level in the reactor container.

8. The process according to any one of the claims 1 to 7, characterized in that a plurality of disk-shaped rotor wheels (35) driven by submersible motors is used for the aeration of the sludge, one each running wheel being provided per 20 to 25 cubic meters of container content.

9. The process according to claim 1, characterized by the use of a device (9) for the destruction of the foam (10) forming on the surface of the substrate present in the reactor container (6, 14), said device (9) being provided with a disk-shaped rotor wheel (47) driven in rotating motion by a submersible motor and disposed approximately horizontally in the area of the boundary between the liquid and the foam phases of the substrate above the motor, the upper side (49) of the rotor wheel (47) being provided with approximately radially extending ribs (48).

10. The process according to claim 9, characterized in that the ribs (48) extend arcuately on the upper side (49) of the rotor wheel (47).

11. The process according to any one of the claims 1 to 10, characterized in that the number of the ribs (48) on the rotor wheel (47) of the device for the destruction of the foam is smaller than the number of ribs (42) on the rotor wheel (35) of the aeration device (8), preferably less than half the number of ribs of the aeration device.

12. The process according to any one of the claims 1 to 11, characterized in that the content of the reactor container (6, 14) is mixed through in vertical direction by at least one vertical mixer (11).

13. The process according to any one of the claims 1 to 12, characterized in that a digestion tank for the aerobic treatment of the sludge is interposed between the sludge silo and the reactor container disposed upstream thereof.

14. A process for the disposal, in particular the hygienizing treatment, of the sludge formed in a clarification plant, the sludge being passed in batches to at least one reactor container (6) and there subjected to aerobic treatment with use of at least one aeration device (8) and at least one device (9) for the destruction of the foam (10) forming on the surface of the substrate present in the reactor container (6), characterized in that the air supply effected by the aeration device (8) is controlled.

15. The process according to claim 14, characterized in that the control of the air supply is effected by the output regulation of the aeration device (8).

16. The process according to claim 14 or 15, characterized in that the power input of the device for the destruction of the foam (10) forming on the surface of the substrate present in the reactor container is used as an actuating variable for the control of the air supply.

17. The process according to claim 14 or 15, characterized in that the temperature of the sludge present in the reactor container is used as an actuating variable for the control of the air supply.

18. The process according to any one of the claims 14 to 17, characterized in that the sludge is subsequently subjected to anaerobic treatment.

## Revendications

1. Procédé pour dépolluer, notamment hygiéniser, la boue produite dans une station d'épuration, la boue étant en premier lieu alimentée en charges à une cuve de réacteur (6) pour un traitement aérobie, la cuve de réacteur (6) étant pourvue d'au moins un dispositif d'aération (8) et au moins un dispositif (9) pour la destruction de la mousse (10) formant sur la surface du substrat présent dans la cuve de réacteur (6), après quoi la boue traitée est recueillie par un silo de boue (31), caractérisé en ce que l'on utilise un dispositif d'aération (8) pourvu d'une roue mobile (35) en forme de disque actionnée en mouvement de rotation par un moteur submersible et disposée à peu près horizontalement sous ledit moteur, la surface supérieure (39) de ladite roue (35) couvrant un orifice annulaire (38) d'un canal d'air (36) relié à l'atmosphère par l'intermédiaire d'une conduite d'aspiration d'air (37), la surface inférieure (41) de ladite roue (35) étant pourvue de nervures (42) s'étendant à peu près radialement et couverte autour de sa périphérie par un anneau de recouvrement (43), une fente (40, 41) restant libre entre le bord de l'orifice annulaire (38) du canal d'air (36) et la surface supérieure (39) de la roue mobile (35) ainsi qu'entre l'anneau de recouvrement (43) et la surface inférieure (41) de la roue mobile (35).

2. Procédé selon la revendication 1, caractérisé en ce que l'on utilise un anneau de recouvrement (43) dont le diamètre extérieur est plus grand que le diamètre de la roue mobile (35) et dont le diamètre intérieur est plus petit que le diamètre de la roue mobile (35).

3. Procédé selon la revendication 1, caractérisé en ce que les nervures (42) s'étendent en arc sur la surface inférieure (41) de la roue mobile (35).

4. Procédé selon la revendication 1, 2 ou 3, caractérisé en ce qu'au moins 8 nervures, de préférence entre 8 et 20 nervures (42), sont pourvues.

5. Procédé selon une des revendications 1 à 4, caractérisé en ce que le moteur est alimenté par l'intermédiaire d'un dispositif régulateur de rendement.

6. Procédé selon la revendication 5, caractérisé en ce que le moteur est un moteur à courant alternatif et est alimenté par l'intermédiaire d'un dispositif de réglage des fréquences.

7. Procédé selon la revendication 5 ou 6, caractérisé en ce que le dispositif régulateur de rendement est réglé assujetti à la température et/ou le niveau de la mousse dans la cuve de réacteur.

8. Procédé selon une des revendication 1 à 7, caractérisé en ce que l'on utilise plusieurs roues mobiles (35) en forme de disque actionnées par des moteurs submersibles pour l'aération de la boue, chaque roue mobile étant pourvue pour 20 à 25 m³ du contenu de la cuve.

9. Procédé selon la revendication 1, caractérisé en ce que l'on utilise un dispositif (9) pour la destruction de la mousse (10) formant sur la surface du substrat présent dans la cuve de réacteur (6,14), ledit dispositif (9) étant pourvu d'une roue mobile (47) en forme de disque actionnée en mouvement de rotation par un moteur submersible et disposé à peur près horizontalement dans la région de la limite entre la phase liquide et mousseuse du substrat en haut du moteur, la surface supérieure (49) de la roue (47) étant pourvue de nervures (48) s'étendant à peu près radialement.

10. Procédé selon la revendication 9, caractérisé en ce que les nervures s'étendent en arc sur la surface supérieure (49) de la roue mobile (47).

11. Procédé selon une des revendications 1 à 10, caractérisé en ce que le nombre des nervures (48) sur la roue mobile (47) du dispositif (9) pour la destruction de la mousse est moindre que le nombre des nervures (42) sur la roue mobile (35) du dispositif d'aération (8), de préférence moindre que la moitié du nombre des nervures du dispositif d'aération.

12. Procédé selon une des revendications 1 à 11, caractérisé en ce que le contenu de la cuve de réacteur (6, 14) est malaxé en direction verticale au moyen d'au moins un malaxeur vertical (11).

13. Procédé selon une des revendications 1 à 12, caractérisé en ce qu'une chambre de digestion des boues pour le traitement anaérobie de la boue est interposée entre le silo de boue et la cuve de réacteur disposée en amont.

14. Procédé pour dépolluer, notamment hygiéniser, la boue produite dans une station d'épuration, la boue étant alimentée en charges à au moins une cuve de réacteur (6) et là étant soumise à un traitement aérobie en utilisant au moins un dispositif d'aération (8) et au moins un dispositif (9) pour la destruction de la mousse (10) formant sur la surface du substrat présent dans la cuve de réacteur (6), caractérisé en ce que l'alimentation en air effectuée par le dispositif d'aération (8) est réglée.

15. Procédé selon la revendication 14, caractérisé en ce que le réglage de l'alimentation en air est effectuée par la régulation de puissance des dispositifs d'aération (8).

16. Procédé selon la revendication 14 ou 15, caractérisé en ce que la puissance absorbée du dispositif pour la destruction de la mousse (10) formant sur la surface du substrat présent dans la cuve de réacteur est utilisée comme quantité de réglage pour le réglage de l'alimentation en air.

17. Procédé selon la revendication 14 ou 15, caractérisé en ce que la température de la boue présente dans la cuve de réacteur est utilisée comme quantité de réglage pour le réglage de l'alimentation en air.

18. Procédé selon une des revendications 14 à 17, caractérisé en ce que la boue est en suite soumise à un traitement anaerobie.
